Europäisches Patentamt

(19) European Patent Office

Office européen des brevets

(11) Veröffentlichungsnummer: **0 036 391**
**B1**

(12) **EUROPÄISCHE PATENTSCHRIFT**

(45) Veröffentlichungstag der Patentschrift:
13.08.86

(51) Int. Cl.⁴: **B 29 C 51/10,** B 29 C 51/12,
C 08 J 5/24

(21) Anmeldenummer: 81810097.6

(22) Anmeldetag: 16.03.81

(54) Verfahren zur Herstellung faserverstärkter Kunststoffgegenstände und Prepreg zu seiner Durchführung sowie danach hergestellte Gegenstände.

(30) Priorität: 17.03.80 CH 2057/80
22.07.80 DE 3027655

(43) Veröffentlichungstag der Anmeldung:
23.09.81 Patentblatt 81/38

(45) Bekanntmachung des Hinweises auf die Patenterteilung:
13.08.86 Patentblatt 86/33

(84) Benannte Vertragsstaaten:
AT FR GB IT NL SE

(56) Entgegenhaltungen:
CH-A-357 864
DE-A-2 317 945
DE-A-2 831 679
FR-A-2 231 696
US-A-2 441 097
US-A-3 881 978

(73) Patentinhaber: Schreiber, Herbert, Seeblick 3, CH-8832 Wollerau (CH)

(72) Erfinder: Schreiber, Herbert, Seeblick 3, CH- 8832 Wollerau (CH)

(74) Vertreter: Quehl, Horst Max, Dipl.- Ing.,
Patentanwalt Promenadengasse 18, CH- 8001 Zürich (CH)

## Beschreibung

Gegenstand der Erfindung sind ein Verfahren zur Herstellung faserverstärkter Kunststoffgegenstände aus Prepregs durch Vakuumformung sowie Prepregs zur Durchführung des Verfahrens und die nach dem Verfahren hergestellten Gegenstände.

Prepregs aus mit härtbaren Harzen imprägniertem Fasermatten wurden bisher durch Verpressen im geheizten Formen verarbeitet. Dieses Verfahren hat verschiedene Nachteile. Einmal sind die Formen wegen der erforderlichen Uebereimstimmung von Matrize und Patrize ausserordentlich teuer. Zum andern kann eine Mindestdicke des Zwischenraumes und damit der Formteildicke nicht unterschritten werden, da andernfalls der Fluss des verstärkten Materials gestört wäre. Aus diesem Grund konnte zun Beispiel bei Fahrzeugteilen die mit faserwerstärkten Kunststoffteilen an sich erzielbare Gewichtseinsparung nicht in vollem Umfang realisiert werden und ihre Anwendung blieb auf dickwandige Teile beschränkt.

Es wurde nun gefunden, dass sich Prepregs, welche die Bedingungen des Anspruchs 1 erfüllen, durch Vakuumformumg und Strahlenhärtung gemäss Anspruch 1 verarbeiten lassen, wobei die genannten Nachteile verrieden werden. Bei der Vakuumformung, die bereits bei thermoplastischen Kunststoffen in grossem Umfang angewandt wird, wird das Prepreg über eine einseitig offene Form gelegt und am Rand der Form luftdicht amgepresst. Durch Anlegen eines Vakuums zwischen Form und Prepreg schmiegt sich dieses eng an die Form an und kann dann gehärtet werden. Der Vakuumformung gleichzusetzen ist jedes Verfahren, bei dem die Verformung durch pneumatische, unmittelbar auf das Prepreg einwirkende Druckunterschiede bewirkt wird.

In der US-A-3 881 978 sind Prepregs aus Harzen mit einer Viskosität ab 10 000 Ns/m$^2$ und Glasfasergeweben oder -matten beschrieben. Diese lassen sich jedoch nicht vakuumformen umd strahlenhärten, sondern werden in üblicher Weise durch Heisspressen verarbeitet, wobei die Deckfolie vorher entfernt werden muss. Die DE-A-2 831 679 beschreibt Prepregs aus Glasfasermatten umd photohärtbaren Harzen, deren Viskosität in dem erfindungsgemässen Bereich liegt. Die Möglichkeit einer Vakuumformumg ist hier jedoch nicht erwähnt und auch sehr unwahrscheinlich, da die Faserlänge 50 mm beträgt und als Deckfolie eine nicht dehnbare Cellophanfolie verwendet wird.

Das Verfahren gestaltet sich besonders vorteilhaft, wenn ein strahlenhärtbares Material verwendet wird. Hierdurch lässt sich eine sehr rasche und energiesparende Härtung erreichen. Ausserdem ist es möglich, bestimmte Flächen durch Abschirmung von der Härtung auszuschliessen, so z. B. die Linien, an denen das Werkstück bei der Weiterverarbeitung abgeschnitten werden muss. UV- und Lichthärtung lässt sich bei polymerisierbaren Harzen im allgemeinen durch Zusatz entsprechender Sensibilisatoren erreichen, während Härtbarkeit durch Elektronenstrahlen bei vielen Harzen schon von Natur aus gegeben ist.

Bei der Verwendung UV- und lichthärtbarer Harze sind für die Strahlung durchlässige Verstärkungsfasern zu verwenden. Hierfür eignen sich z. B. Glas-, Quarz- und synthetische Fasern. Der Faseranteil bewegt sich in den üblichen Grenzen von etwa 10 bis 50 Gew.% Glasfasern. Eine besonders einfache Handhabung des Verfahrens ergibt sich, wenn das Prepreg beidseitig mit einer dünnen, leicht reckbaren Folie eingehüllt ist. Hierbei kann eine Folie verwendet werden, die von dem gehärteten Formteil leicht abtrennbar ist, z. B. eine niedrigkristalline Polyolefirfolie oder Polyvinylidenchloridfolie. Eine sehr nützliche Variation des Verfahrens besteht in der Verwendung einer Deckfolie, auf der das gehärtete Harz so fest haftet, dass sie als Deckschicht auf dem Fertigteil verbleiben kann. Besonders hochwertige Teile erhält man, wenn als Deckfolie eine PVC-Folie mit einem Gehalt an polymerisierbaren Monomeren, z. B. mehrfunktionellen Methacrylestenn, verwendet wird. Nach diesem Verfahren lassen sich auch dekorativ gefärbte Oberflächen erzielen, die lichtundurchlässig sind. Eine dekorativ gefärbte Feinschicht kann aber auch als Bestandteil des Prepregs unterhalb einer abtrennbaren Folie eingebaut werden. In beiden Fällen ist im allgemeinen eine thermische Härtung dieser Schicht erforderlich. Diese kann während oder anschliessend an die Lichthärtung erfolgen, gegebenerfalls auch erst nach der Entformung.

## Beispiele:

**Beispiel 1** (Vergleichsversuch, Beispiel liegt ausserhalb der Ansprüche)

Ein Prepreg wird aus einer gleichmässigen Aufschüttung von 450 g/m$^2$ Glasfasern von 13 mm Länge durch Imprägnieren mit 1340 g/m$^2$ styrolhaltigem UP-Harz zwischen zwei dünnen Weichpolyäthylerfolien oder Polyvinylidenchloridfolien hergestellt. Das UP-Harz enthält 1,5 % eines UV-Sensibilisators. Ausserdem werden dem UP-Harz unmittelbar vor der Imprägnierung 2,6 % eines pulverförmigen Cellulose-aceto-butyrats beigemischt. Dieselbe Mischung ergibt in Abwesenheit der Glasfasern nach vollständiger Lösung des Celluloseesters eine Viskosität von 10 Nsm$^{-2}$, gemessen mit einem Brookfieldviskosimeter, Spindel 7, 10 bis 100 Umdrehungen pro Minute. Das nicht verdickte Harz hat eine Viskosität von 0,6 Nsm$^{-2}$.

Das Prepreg wird über eine Matrize gelegt, am Hand angepresst und durch Anlegen von Vakuum durch Bohrungen in der Matrize in die Form hineingesaugt. Der Formvorgang ist in wenigen Sekunden beendet. Danach wird der Formteil mit UV-Licht bestrahlt. Die Härtung ist, je nach Intensität der Lichtquelle, in 1 bis 10 Minuten beendet, wonach der Formteil entnommen werden kann. Die PE-Folie kann nach der Härtung mühelos abgezogen werden. Infolge der relativ niedrigen Viskosität tritt bei diesem Prepreg ein Fliessen des Harzes zu den stärker gereckten Stellen ein und führt dort zu starken Harzanreicherungen. Die Anwendung dieses Prepregs ist daher auf Formteile mit Krümmungsradien von minimal 15 mm beschränkt.

**Beispiel 2**

Ein Prepreg wird in gleicher Weise wie in Beispiel 1 hergestellt und verarbeitet. Dem UP-Harz werden jedoch diesmal 6.7 % Cellulose-ester beigemischt, entsprechend einer Viskosität von 480 Nsm$^{-2}$, gemessen mit Brookfield, Spindel 7, 0,5 Umdrehungen pro Minute. Dieses Prepreg lässt sich ohne Schwierigkeiten auch in sehr stark gekrümmte Formteile einsaugen und bildet auch Krümmungen von unter 1 mm bei über 100 % Reckung absolut formgetreu nach. Das Beispiel zeigt die Ueberlegenheit des Prepregs mit der höheren Harzviskosität.

**Beispiel 3**

Ein Prepreg wird wie in Beispiel 1 hergestellt und verarbeitet, jedoch mit 11,8 % Cellulose-ester. Dem entspricht die Harzviskosität von 4500 Nsm$^{-2}$, gemessen mit Brookfield, Spindel 7, 0,5 Umdrehungen pro Minute. Auch dieses Prepreg lässt sich sehr gut vakuumformen. Der kleinste formgetreu nachbildbare Krümmungsradius beträgt 5 mm an engen und 2,5 mm an weiten Stellen.

**Beispiel 4**

Ein Prepreg wird wie in Beispiel 2 hergestellt und verarbeitet, jedoch werden 30 mm lange Glasfasenn verwendet. Die Verformbarkeit ist etwas schlechter als in Beispiel 2. Der kleinstmögliche Krümmungsradius beträgt 6 mm an engen und 2,5 mm an weiten Stellen.

**Beispiel 5** (Vergleichsversuch, Beispiel liegt ausserhalb der Ansprüche)

Ein Prepreg wird wie in Beispiel 2 hergestellt und verarbeitet, jedoch. aus einer Glasfasermatte mit 50 mm langen Fasern. Die Verformbarkeit ist noch gut, aber deutlich schlechter als in Beispiel 2. Auch an weiten Stellen werden nur noch Krümmungsradien von mindestens 6 mm formgetreu nachgebildet. Insbesondere ist aber bei diesem Prepreg der Harzfluss wieder wesentlich grösser.

**Beispiel 6**

Ein Prepreg wird wie in Beispiel 2 hergestellt und verarbeitet. Das Prepreg ist jedoch auf der der Matrize zugewandten Seite mit einer Weich-PVC-Folie abgedeckt. Diese enthält auf 100 Teile PVC 50 Teile DOP und 50 Teile Trimethylolpropan-trimethacrylat und 1 Teil Benzoylperoxyd. Nach der Photohärtung und Entformung wird der Formteil noch 20 Minuten bei 100 C nachgehärtet. Während sich die PE-Folie leicht abziehen lässt bildet die PVC-Folie einen glatten, sehr kratzfesten, gut haftenden Ueberzug.

**Beispiel 7**

Ein Prepreg wird wie in Beispiel 2 hergestellt. Jedoch wird vor dem Aufschütten der Glasfasern auf die eine Deckfolie eine etwa 1 mm dicke UP-Feinschicht aufgetragen. Diese besteht aus einem UP-Harz mit geringem Härtungsschwund, das 1,5 % Benzoylperoxyd enthält und das durch Zusatz von Quarzmehl auf einen dünn pastenartigen Zustand verdickt ist. Der Feinschicht kann auch ein UV-undurchlässiges Pigment beigemischt sein. Das Prepreg wird wie in Beispiel 1 verarbeitet, wobei die Feinschichtseite der Form zugewandt ist. Nach oder gleichzeitig mit der Photohärtung wird der Formteil durch IR-Strahlung 20 Minuten auf etwa 100°C erhitzt. Nach Abziehen der Deckfolie weist der Formteil eine einwandfreie, glatte, formtreue Oberfläche auf.

Die Viskositätsangaben in den Patentansprüchen und in der Beschreibung beziehen sich auf die Gesamtheit der fliessfähigen Stoffe in den Prepregs. Als Gesamtheit der fliessfänigen Stoffe ist hierbei die Mischung aller Bestandteile eines Prepregs mit Ausnahme der Verstärkungsfasern und Deckfolien, sowie, falls vorhanden, mit Ausnahme der Feinschicht, zu verstehen. Im Allgemeinen sind dies die Mischungen bezw. Lösungen des flüssigen härtbaren Harzes mit dem Verdickungsmittel und weiteren Zuschlagstoffen wie Thixotropierungsmitteln, Sensibilisatoren, Beschleunigern, Stabilisatoren, Farbstoffen und gegebenenfalls auch festen Füllstoffen, soweit diese mit dem Harz eine fliessfähige Mischung bilden. Als Füllstoffe sind auch feinteilige feste Zuschlagstoffe mit faseriger Struktur wie Zellulose, Asbestmehl oder gemahlene Glasfasern zu betrachten, soweit diese mit dem Harz eine fliessfähige Mischung bilden.

Bei plastisch fliessenden Mischungen, die eine Fliessgrenze aufweisen, beziehen sich die Viskositätsangaben auf die echte Viskosität, wie sie sich in bekannter Weise aus der Steigung der Schubspannungs-Schergeschwindigkeits-Kurve oberhalb der Fliessgrenze ergibt. Bei thixotropen Mischungen ist die im Anschluss an eine Ruheperiode gemessene, höhere Viskosität massgebend.

Die obere Grenze der Viskositäten der im Prepreg enthaltenen fliessfähigen Stoffe liegt bei etwa 100 000 Ns/m$^2$. Auf jeden Fall müssen die Harzmischungen bei der Verformungstemperatur nicht fest, sondern fliessfähig sein. Dies erhellt aus folgendem Vergleichsversuch.

**Vergleichsversuch:**

Ein gemäss Beispiel 3 hergestelltes Prepreg wurde an der Luft liegen gelassen, bis durch Verdunsten des Styrols ein Gewichtsverlust von 20 % bezogen auf die Mischung von Cellulose-ester und UP-Harz erreicht war. Dieses Prepreg war für die Vakuumformung nicht mehr geeignet. Für eine ebenfalls um 20 % eingedickte Mischung von UP-Harz mit 11,8 % Cellulose-ester wurde durch Extrapolation eine Viskosität von 500 000 Ns/m$^2$ ermittelt. Dieser Wert stellt die obere Viskositätsgrenze des Harzes dar, bei der eine Vakuumformung des Prepregs nicht mehr möglich ist.

Das Ergebnis dieses Vergleichsversuches ist besonders bemerkenswert, da die Harze in den üblicherweise mit MgO verdickten Prepregs für das Heisspressverfahren bei Raumtemperatur eine höhere Viskosität aufweisen und in einem gelartigen, nicht fliessfähigen Zustand vorliegen. Diese Prepregs sind für die Vakuurformung bei normalen Umgebungstemperaturen nicht geeignet.

Das erfindungsgemässe Verfahren erlaubt die rationelle, weitgehend automatisierte Verarbeitung von Prepregs (SMC) mit einfachen, preisgünstigen Vorrichtungen und geringem Energieaufwand und ermöglicht die optimale Ausnutzung der hohen Festigkeitseigenschaften faserverstärkter Duroplast-Kunststoffe.

**Patentansprüche**

1. Verfahren zur Herstellung faserverstärkter Kunststoffgegenstände durch Verformung von flächigen Prepregs aus mit härtbaren Harzen imprägnierten Fasern, wobei die Viskosität der Gesamtheit der im Prepreg enthaltenen fliessfähigen Stoffe, einschliesslich etwaiger Füllstoffe, jedoch in Abwesenheit der Verstärkungsfasern, gemessen bei der Verformungstemperatur und niedriger Schergeschwindigkeit mindestens 100 Ns/m$^2$ und weniger als 100 000 Ns/m$^2$ beträgt und die Länge der einzelnen Verstärkungsfasern grösser als 2 mm und kleiner als 30 mm ist, wobei die Prepregs bei der Verformung mindestens einseitig, bevorzugt aber beidseitig mit einer flexiblen, dehnbaren Folie bedeckt sind und durch Vakuumformung oder mittels einseitig wirkenden Luftdrucks eng an eine einseitig offene Form angepresst und dann durch Elektronenstrahl, ultraviolettes oder sichtbares Licht gehärtet werden, wobei die Prepregs ein mittels dieser Strahlung härtbares Harz enthalten.

2. Verfahren nach Anspruch I, dadurch gekennzeichnet, dass die Länge der Verstärkungsfasern grösser als 4 mm ist.

3. Verfahren nach Anspruch 1 oder 2, dadurch gekennzeichnet, dass eine von dem ausgehärteten Harz trennbare Folie, bevorzugt eine Folie aus einem Weichpolyolefin oder aus Polyvinylidenchlorid als Deckfolie verwendet wird.

4. Verfahren nach Anspruch 1 oder 2, dadurch gekennzeichnet, dass eine sich. bei der Härtung mit dem gehärteten Harz fest haftend verbindende Deckfolie verwendet wird, bevorzugt eine ein härtbares Monomeres enthaltende Vinylchlorid-Polymer oder Copolymer-Folie, welche durch die härtende Strahlung oder eine Wärmebehandlung gehärtet wird, wobei im letzteren Fall die der Form zugewandte Folie deckend oder strahlenundurchlässig eingefärbt sein kann.

5. Verfahren nach Anspruch 3, dadurch gekennzeichnet, dass sich auf der der Form zugewandten Seite unter der Deckfolie eine gegebenerfalls eingefärbte und warmhärtbare Feinschicht befindet, die durch die härtende Strahlung oder durch eine Wärmebehandlung gehärtet wird.

6. Verfahren nach einem der Ansprüche 1 bis 5, dadurch gekennzeichnet, dass als Harz ein ungesättigter Polyester oder ein ungesättigtes Polyurethan, bevorzugt als Lösung in einem polymerisierbaren Monomeren, insbesondere in Styrol, enthalten ist.

7. Verfahren nach einem der Ansprüche 1 bis 6, dadurch gekennzeichnet, dass ein an sich niedriger viskoses Harz durch Auflösen eines in diesem löslichen Polymeren, mit dem es vor oder während der Herstellung des Prepregs zusammengebracht wird, auf die in Anspruch 1 angegebenen Viskositätsbereiche verdickt wird, bevorzugt durch Auflösen eines in UP-Harz löslichen Celluloseesters, insbesondere eines Cellulose-acetobutyrats, in einem UP-Harz.

8. Prepreg als Mittel zur Durchfürung des Verfahrens gemäss Anspruch 1 oder 2, das aus mit härtbaren Harzen imprägnierten Verstärkungsfasern in flächiger Anordnung besteht, wobei die Viskosität der Gesamtheit der im Prepreg enthaltenen fliessfähigen Stoffe, einschliesslich etwaiger Füllstoffe, jedoch in Abwesenheit der Verstärkungsfasern, gemessen bei niedriger Schergeschindigkeit und Raumtemperatur, mindestens 100 Ns/m$^2$ und weniger als 100 000 Ns/m$^2$ beträgt und die Länge der einzelnen Verstärkungsfasern grösser als 2 mm, bevorzugt grösser als 4 mm, und kleiner als 30 mm, ist, ein durch Elektronenstrahl, ultraviolettes oder sichtbares Licht härtbares Harz enthalten ist und das Prepreg mindestens einseitig, bevorzugt beidseitig, mit einer flexiblen, dehnbaren Folie bedeckt ist.

9. Prepreg gemäss Anspruch 8, dadurch gekennzeichnet, dass es mit einer ein härtbares bzw. polymerisierbares Monomeres enthaltenden Poly- oder Copoly-vinylchlorid-Folie mindestens einseitig bedeckt ist, wobei die Deckfolie auf einer Seite des Prepregs lichtabsorbierend eingefärbt sein kann.

10. Prepreg gemäss Anspruch 8 oder 9, dadurch gekennzeichnet, dass es ein styrolhaltiges UP-Harz enthält, das durch einen in diesem löslichen Celluloseester, bevorzugt ein Cellulose-acetobutyrat, auf den in Anspruch 8 angegebenen Viskositätsbereich verdickt ist.

## Claims

1. Method for producing fibre reinforced articles of synthetic material by shaping flat prepregs of fibres impregnated with settable resins, in which the viscosity of the totality of the liquifiable material contained in the prepreg, inclusive of any filler, but in absence of the reinforcing fibres, measured at the shaping temperatures and at low shear velocity is at least 100 Ns/m and less than 100 000 Ns/m² and the length of the individual reinforcing fibres is greater than 2mm and less than 30 mm, in which the prepregs during shaping are covered on at least one side, preferably on both sides, with a flexible, extensible film and are pressed by vacuum forming or by means of air pressure acting against one side closely against a mould which is open on one side, and then hardened by electron beam, ultraviolet or visible light, in which the prepregs contain a resin which is settable by means of such radiation.

2. Method according to claim 1, characterised in that the length of the reinforcing fibres is greater than 4 mm.

3. Method according to claim 1 or 2, characterised in that a film which is separable from the set resin, perferably a film of a soft polyolefin or polyvinyliden chloride, is used as the covering film.

4. Method according to claim 1 or 2, characterised in that a covering film is used which bonds tightly to the set resin on setting, preferably vinyl chloride polymer or co-polymer film containing a settable monomer, which is set by the setting radiation or a heat treatment in which latter case the film facing the mould can be self-coloured so as to be opaque or impermeable to light.

5. Method according to claim 3, characterised in that there is a self-coloured, if necessary, and heat settable fine layer beneath the covering film on the side facing the mould, which is set by the setting radiation or by a heat treatment.

6. Method according to any of claims 1 to 5, characterised in that an unsaturated polyester or an unsaturated polyurethane, preferably as a solution in a polymerisable monomer, especially in styrene, is comprised in the resin.

7. Method according to any of claims 1 to 6, characterised in that an inherently low viscosity resin is thickened to the viscosity region prescribed in claim one by dissolving a polymer in it, with which it is combined before or during the production of the prepreg, preferably by dissolving in a UP resin a cellulose ester dissolvable in a UF resin, especially a cellulose aceto-hutyrate.

8. A prepreg as a means for carrying out the method according to claim 1 or claim 2, comprising reinforcing fibres in a sheet-arrangement impregnated with a settable resin, in which the viscosity of the totality of the liguifiable material contained in the prepreg, inclusive of any filler, but in absence of the reinforcing fibres, measured at low sheer velocity and room temperature, is at least 100 Ns/m² and less than 100,000 Ns/m² and the length of the individual reinforcing fibres is greater than 2mm, preferably greater than 4mm, and smaller than 30mm, a resin which is settable by electron beam, ultraviolet or visible light, and the prepreg is covered on at least one side preferably both sides, with a flexible, extensible film.

9. A prepreg according to claim 8, characterised in that it is covered on at least one side with a poly- or copoly- vinyl chloride film containing a settable or polymerisable monomer, in which the covering film can be self-coloured so as to be light-absorbing on one side of the prepreg.

10. A prepreg according to claim 8 or claim 9, characterised in that it contains a styrene-containing UP resin which is thickened, by a cellulose ester dissolved in it, preferably a cellulose-aceto-butyrate, to a viscosity level prescribed in claim 8.

## Revendications

1. - Procédé pour fabriquer des objets en matière plastique armée de fibres, par formage de feuilles préimprégnées, constituées de fibres imprégnées de résines durcissables; la viscosité de l'ensemble des matières capables de fluer qui sont contenues dans chaque feuille, y compris éventuellement les matériaux de charge mais abstraction faite des fibres de renfort, étant comprise entre 100 Ns/m² au moins et 100.000 Ns/m² au plus, cette viscosité étant mesurée à la température de formage et à une faible vitesse de cisaillement, et la longueur des fibres de renfort étant comprise entre 2 mm et 30 mm; caractérisé en ce qu'on recouvre chaque feuille préimprégnée au moment du formage avec une feuille mince, souple et extensible, disposée au moins sur une face de chaque feuille préimprégnée mais de préférence sur les deux faces; en ce qu'on applique étroitement la feuille préimprégnée sur un moule ouvert d'un côté, en effectuant une opération de moulage sous vide, ou au moyen d'une pression d'air comprimé d'un côté de la feuille; et en ce qu'on durcit la feuille préimprégnée au moyen d'une projection d'électrons, ou de rayonnement ultraviolet ou de lumière visible, la feuille préimprégnée contenant dans ce but une résine adaptée à durcir sous l'effet de ces rayonnements.

2. - Procédé selon la revendication 1, caractérisé en ce que la longueur des fibres de renfort est supérieure à 4 mm.

3. - Procédé selon l'une des revendications 1 ou 2, caractérisé en ce qu'on utilise une feuille mince de recouvrement pouvant être séparée de la résine durcie, cette feuille étant constituée de préférence d'une polyoléfine molle ou de chlorure de polyvinylydène.

4. - Procédé selon l'une des revendications 1 ou 2, caractérisé en ce qu'on utilise une feuille de recouvrement qui se fixe solidement sur la résine durcie au moment du durcissement de cette résine, cette feuille de recouvrement étant constituée de préférence d'un polymère ou d'un copolymère de chlorure de vinyle contenant un monomère durcissable; cette feuille se trouvant durcie sous l'effet du rayonnement de durcissement, ou sous l'effet d'un traitement thermique; et dans ce dernier cas la feuille disposée en regard du moule pouvant être teintée pour assurer un effet de protection ou d'opacité à l'égard des rayonnements.

5. - Procédé selon la revendication 3, caractérisé en ce que la feuille de recouvrement disposée en regard du moule porte sur sa face interne une couche mince, éventuellement teintée et durcissable à chaud, prévue pour durcir sous l'effet du rayonnement de durcissement ou d'un traitement thermique.

6. - Procédé selon l'une des revendications 1 à 5, caractérisé en ce que la résine d'imprégnation contient un polyester non saturé ou un polyuréthane non saturé, de préférence en solution dans un monomère polymérisable tel que le styrol en particulier.

7. - Procédé selon l'une des revendications 1 à 6, caractérisé en ce qu'on utilise une résine ayant naturellement une faible viscosité, en la diluant dans un polymère soluble avec lequel on mélange cette résine avant la confection de la feuille préimprégnée ou pendant cette confection, pour obtenir une viscosité comprise dans les limites définies dans la revendication 1, en opérant de préférence par dissolution d'un ester de cellulose soluble dans une résine à base de polyuréthane non saturé, en particulier par dissolution d'un acétobutyrate de cellulose dans une résine à base de polyuréthane non saturé.

8. - Feuille préimprégnée, utilisée pour appliquer le procédé conforme à l'une des revendications 1 ou 2, comportant des fibres de renfort disposées en nappe et imprégnées de résines durcissables; caractérisée en ce que la viscosité de l'ensemble des matières capables de fluer qui sont contenues dans la feuille, y compris éventuellement les matériaux de charge mais abstraction faite des fibres de renfort, est comprise entre 100 Ns/m² au moins et 100.000 Ns/m² au plus, cette viscosité étant mesurée à une faible vitesse de cisaillement et à la température ambiante du local, et la longueur des fibres de renfort étant supérieure à 2 mm, de préférence supérieure à 4 mm, et inférieure à 30 mm; cette feuille préimprégnée contenant une résine durcissable sous l'effet d'une projection d'électrons, ou d'un rayonnement ultraviolet ou de lumière visible; et cette feuille préimprégnée étant recouverte, au moins sur une face et de préférence sur les deux faces, par une feuille mince souple et extensible.

9. - Feuille préimprégnée selon la revendication 8, caractérisée en ce qu'elle comporte au moins sur une face une feuille de recouvrement constituée d'un polymère ou d'un copolymère de chlorure de vinyle, qui contient un monomère durcissable par polérisation la feuille de recouvrement disposée sur l'une des faces de la feuille préimprégnée pouvant être teintée pour absorber la lumière.

10. - Feuille préimprégnée selon l'une des revendications 8 ou 8, caractérisée en ce qu'elle contient une résine à base de polyuréthane non saturé et de styrol, cette résine étant épaissie dans les limites de viscosité définies dans la revendication 8 au moyen d'un ester de cellulose, tel qu'un acétobutyrate de cellulose de préférence, qui est soluble dans cette résine.